# EUROPÄISCHE PATENTSCHRIFT

(11) **EP 0 824 093 B1**
(45) Veröffentlichungstag und Bekanntmachung des Hinweises auf die Patenterteilung: **08.01.2003**
(21) Anmeldenummer: 97890127.0
(22) Anmeldetag: 08.07.1997
(51) Int. Cl.: C04B 28/02, C04B 24/38

(54) **Zusatzmittel für Spritzbeton**
Additive for sprayable concrete
Additif pour béton projeté

(30) Priorität: 13.08.1996 AT 145996
(43) Veröffentlichungstag der Anmeldung: 18.02.1998
(73) Patentinhaber: AGRANA Zucker und Stärke Aktiengesellschaft, 1020 Wien (AT)
(72) Erfinder: Grüll, Dietmar, Dipl.Ing.Dr., 3442 Langenschönbichl (AT); Kubadinow, Nikolai, Dr., 1130 Wien (AT); Steindl, Roman, Dipl.Ing., 3910 Stift Zwettl (AT)
(74) Vertreter: Pawloy, Peter Michael, Dipl.-Ing.

(56) Entgegenhaltungen:
- EP-A- 0 014 258
- EP-A- 0 076 927
- EP-A- 0 507 419
- EP-A- 0 534 639
- US-A- 5 443 636
- CHEMICAL ABSTRACTS, vol. 116, no. 2, 13.Januar 1992 Columbus, Ohio, US; abstract no. 10545j, XP000318685 & JP 03 223 139 A (SHIN-ETSU CHEMICAL INDUSTRY CO., LTD)
- PATENT ABSTRACTS OF JAPAN vol. 017, no. 452 (C-1099), 19.August 1993 & JP 05 105493 A (N M B:KK;OTHERS: 01), 27.April 1993,
- DATABASE WPI Section Ch, Week 8310 Derwent Publications Ltd., London, GB; Class A11, AN 83-23640K XP002046971 & JP 58 015 056 A (SHINETSU CHEM IND CO LTD)
- CHEMICAL ABSTRACTS, vol. 84, no. 20, 17.Mai 1976 Columbus, Ohio, US; abstract no. 139935m, XP000183247 & JP 50 035 217 A (NIPPON ASBESTOS CO., LTD)
- DATABASE WPI Section Ch, Week 9729 Derwent Publications Ltd., London, GB; Class A11, AN 97-310964 XP002049294 & AT 403 277 B (ZUCKERFORSCHUNG TULLN GMBH)

## Beschreibung

Gegenstand der vorliegenden Erfindung ist die Verwendung eines Zusatzmittels für Spritzbeton zur Herabsetzung des Staubens und des Rückpralls sowie vorzugsweise zur Regelung des W/Z-abhängigen Fließverhaltens des Spritzbetons während der Verarbeitung.

Bei der Applikation von Spritzbeton bzw. Spritzzementmörtel nach den beiden gebräuchlichen Verfahren, dem Trockenspritzverfahren und dem Nassspritzverfahren, sind in jüngster Zeit wesentliche Fortschritte erzielt worden, die die Verfahren aus arbeitshygienischer, ökologischer und wirtschaftlicher Sicht verbessert haben. Die früher häufig verwendeten Beschleuniger auf Basis von Natriumaluminat wurden weitgehend durch alkaliarme bzw. alkalifreie Beschleuniger ersetzt, da Natriumaluminat wegen seiner gesundheitsgefährdenden Eigenschaften nicht mehr empfohlen werden kann.

Sowohl gerätetechnische Entwicklungen, neu entwickelte hochspezialisierte Spritzbetonzemente als auch die neuen alkaliarmen Beschleuniger führten zur Herabsetzung der Staubentwicklung bei der Verarbeitung an der Baustelle und zur Verminderung des Rückpralls, was sich sowohl in wirtschaftlicher Hinsicht bei der Kalkulation der Baustellenkosten als auch in ökologischer Hinsicht bei der Entsorgung der durch den Rückprall entstehenden Abfallprodukte äußert.

Trotz aller bisher erreichten Verbesserungen ist bei beiden Verarbeitungsverfahren die weitere Optimierung ein dringendes Anliegen der Spritzbetonverarbeiter. Beim Trockenspritzverfahren ist die Staubbelastung der Maschinenführer und der Mannschaft noch immer sehr hoch, auch wenn die Verwendung von hochreaktiven Bindemitteln auf Basis von speziellen Spritzbetonzementen, die zur raschen Erstarrung nicht mehr beschleunigt werden müssen, zu verbesserten Bedingungen geführt hat.

Der Rückprall beträgt je nach Arbeitsweise für das Trockenspritzverfahren noch immer ca. 25 - 35 % des aufgebrachten Materials. Für das Nassspritzverfahren wird bei den verschiedensten Großbaustellen vor allem im Tunnelbau noch immer mit Rückprallwerten von bis zu 15 % gerechnet, was bei diesem Verarbeitungsverfahren die Kosten zusätzlich zu den um einen Faktor 10 höheren Rüstkosten im Vergleich zum Trockenspritzverfahren noch weiter erhöht.

Ein zusätzlicher bedeutender Nachteil beider Verarbeitungsverfahren, der bisher mangels besserer Möglichkeiten zwar toleriert wurde, dessen Vermeidung aber dennoch ansteht, ist die fehlende Gleichmäßigkeit der Betonqualität.

Die PCT-Anmeldung WO 96/14275 ist ein Beispiel'für das Bestreben, die Eigenschaften von Spritzbetonmassen im Hinblick auf verminderte Staubbildung, herabgesetzten Rückprall und Konsistenzregelung zu beeinflussen. Das dort vorgeschlagene Spritzbetonsystem enthält ein Sol-Gel-Zusatzmittel auf der Basis einer Metallverbindung, die bei Elektrolytzugabe oder Erhöhung des pH-Wertes geliert. Dieser Zusatz erlaubt das deutliche Überschreiten des für die Betonqualität optimalen W/Z-Wertes und ist daher mit der gewohnten Arbeitsweise der Düsenführer nicht verträglich.

Die JP 03 223 139 A betrifft ein Zusatzmittel für Beton, welches einen wasserlöslichen Zelluloseether enthält, welcher in einer 2%igen wässerigen Lösung bei 20°C eine Viskosität von 5000-50000 cps aufweist, sowie einen Schaumverhinderer. Ziel der Entwicklung gemäß diesem Dokument ist eine Verminderung der Staubentwicklung sowie eine Verminderung des Rückpralls bei Spritzbeton. Der Zusatz soll nun die Bildung von "air borne dust" verringern, und zwar in direktem Zusammenhang mit der Viskosität des Zusatzes. Von Zusatzmitteln mit einer Viskosität von unter 5000 cps wird ausdrücklich abgeraten, auch werden lediglich wasserlösliche Zelluloseether als zur Verminderung der Staubentwicklung geeignet geoffenbart. Da diese wasserlöslichen Zelluloseether in Beton Luft einschließen können, muss zusätzlich noch ein Schaumverhinderer zugesetzt werden.

Gemäß der JP 05 105 493 A wird durch einen Zusatz von Zelluloseethern die Staubentwicklung bei Spritzbetonen verringert, das W/Z-Verhältnis hingegen wird durch den Zusatz von Polycarbonsäuresalzen beeinflusst.

Die AT 403 277 B beschreibt die Verwendung von nativer oder derivatisierter Kartoffelstärke als Verdickungsmittel, Wasserretentionsverbesserungsmittel bzw. Verarbeitungsmittel in Baustoffen, insbesondere in Spritzputzen.

Hinsichtlich der Staubbelastung bei der Verarbeitung von Betonen ist es aus der EP-A1 0 076 927 bekannt, dass bei Verwendung von Aluminiumhydroxid als alkalifreiem Abbindebeschleuniger für hydraulische Bindemittel eine Verringerung des Staubens, u.a. auch bei Spritzbeton, zu beobachten ist, wenn der Masse wasserquellbare Cellulose-Derivate, wie Hydroxyalkylcellulosen, zugesetzt werden.

Beim Trockenspritzverfahren kann keine Zusammensetzung des Spritzbetons, sondern nur ein Verhältnis Zement zu Zuschlagstoff des Trockengemisches angegeben werden, wie im Folgenden erklärt wird. Der Düsenführer stellt an der Wand eine passende Konsistenz des Spritzbetons durch Regulierung der Menge des Anmachwassers an der Düse ein. Bei konstanten Materialströmen der Bestandteile des Trockengemisches gelingt ihm damit die Einstellung eines konstanten W/Z-Wertes. Durch rückprallende Grobteile wird jedoch die haften gebliebene Mischung feinteil- und zementreicher, der tatsächliche W/Z-Wert wird somit gegenüber der ursprünglichen Einstellung gesenkt. Ohne Berücksichtigung des Rückpralls und gerechnet auf die Zusammensetzung des Trockengemisches ist der W/Z-Wert üblicherweise gleich oder kleiner als 0,55.

Da sich sämtliche Betoneigenschaften in Abhängigkeit vom W/Z-Wert stark verändern bzw. sich im Allgemeinen mit steigendem W/Z-Wert verschlechtern, wie in der einschlägigen Fachliteratur nachgewiesen ist, und da weiters die Materialströme der Bestandteile des Trockengemisches nur selten konstant gehalten werden können bzw. nur mit aufwendiger Gerätetechnik möglichst konstant gefahren werden, ist bei der bisherigen Verarbeitungsweise die aufwendige analytische Kontrolle der aufgebrachten Betonschalen notwendig. Die Betoneigenschaften müssen die geforderten Qualitäten, wie z.B. Frühfestigkeit (J1, J2, J3), nach der Richtlinie Spritzbeton des Österreichischen Betonvereins und die Festigkeitsklasse nach den einschlägigen Normen erreichen.

Beim Trockenspritzbeton unterscheidet man zwei prinzipielle Verfahren zur Herstellung. Das erste benutzt ofentrockene bzw. vorgetrocknete Zuschläge. Dabei kann das Bindemittel bereits längere Zeit vorher mit dem Zuschlag gemischt werden. Eine vorzeitige Reaktion des Bindemittels mit Wasser ist in diesem Fall nahezu ausgeschlossen. Die Staubbelastung und der Rückprall sind aber sehr hoch.

Das zweite Trockenspritzverfahren verwendet natur- oder erdfeuchte Zuschläge. Bei diesem Verfahren dürfen der Zuschlag und das Bindemittel erst kurz vor der Applikation vermengt werden, da die Hydratationsreaktionen der hochreaktiven Zemente innerhalb von wenigen Sekunden einsetzen und zum deutlich Abfallen der Frühfestigkeitsentwicklung führen würden. Der Feuchtigkeitsgehalt der naturfeuchten Zuschläge ist selten so konstant wie gewünscht. Die Kontrolle der Betoneigenschaften ist deshalb sehr aufwendig.

Somit wird weiter nach einem neuen Zusatzmittel gesucht, das die oben genannten Nachteile möglichst gemeinsam, gegebenenfalls aber auch einzeln zu beheben hilft. Außerdem soll das neue Zusatzmittel universell einsetzbar sein, seine Zumischung soll an beliebigen Stellen der Verarbeitungsverfahren erfolgen können und es soll generell mit allen herkömmlichen Zusatzstoffen verträglich sein.

Zur gleichzeitigen Herabsetzung des Staubes und des Rückpralls sowie vorzugsweise zur Regelung des W/Z-abhängigen Fließverhaltens des Spritzbetons während der Verarbeitung wird erfindungsgemäß für ein Zusatzmittel für Spritzbeton modifizierte und/oder chemisch derivatisierte natürliche oder biotechnologisch hergestellte Stärke, gegebenenfalls in Mischung untereinander und mit als Baustoffzusatzmittel bekannten Additiven, verwendet.

Unter modifizierter Stärke wird in der Fachliteratur und gemäß vorliegender Erfindung Stärke verstanden, die durch physikalische oder chemische bzw. enzymatische Reaktion depolymerisiert und in eine kaltwasserquellende oder kaltwasserlösliche Form übergeführt wurde. Zu den bekannten Verfahren zur Modifizierung gehören z.B. Walzentrocknung, Sprühtrocknung, Dextrinierung, Behandlung in Gemischen von wassermischbaren organischen Lösungsmitteln (z.B. niederen Alkoholen) und Wasser mit Wärme und/oder alkalischen Bedingungen.

Weiters kann eine Depolymerisation durch oxidativen, thermochemischen oder säurekatalytischen Abbau oder sehr häufig durch ein oder mehrere enzymatische Verfahrensschritte oder eine Kombination hievon erreicht werden.

Unter chemischen Derivaten sind jene Reaktionsprodukte zu verstehen, die mit oder ohne vorhergehender Aufschluss- oder Abbaureaktionen durch Umsetzung mit Reagentien, die neue Substituenten in die Polymerkette der Stärke einführen, erhalten werden. Die Produkte solcher Reaktionen sind substituierte Polysaccharide, deren Substituenten über kovalente Ester- und/oder Etherbindungen an die Polymerkette gebunden sind. Bevorzugt sind z.B. Methyl-, Ethyl-, Propyl-, Hydroxyethyl-, Hydroxybutyl-, Carboxymethyl-, Cyanoethyl-, carbamoylethylethergruppen oder deren Gemische, Estergruppen mit organischen Mono-, Di- oder Tricarbonsäuren mit einer Kettenlänge von C₁-C₂₅ sowie Ether- oder Estergruppen mehrbindiger Reaktionsmittel, die zur Vernetzung der Polymerketten führen (z.B. Epichlorhydrin, Trimetaphosphat, Phosphoroxychlorid, Zitronensäure, Adipinsäure usw.).

Die Stärke kann aus Knollen oder Wurzeln (Kartoffelstärke, Sagostärke, Tapiokastärke usw.) ebenso wie aus Getreide (Maisstärke, Wachsmaisstärke, Weizenstärke, Reisstärke usw.) oder aus Früchten (Erbsenstärke usw.) stammen.

verfahren zur Derivatisierung von Stärke zur Herstellung von Ethern und Estern allgemein sind in der Fachwelt gut bekannt und werden z.B. in O.B. Wurzburg (Ed.): Modified Starches: Properties and Uses, CRC Press Inc., Boca Raton, Florida, 1986, Kap. 4, 5 und 6, beschrieben. Eine bevorzugte Stärkeveretherungsreaktion ist die Hydroxyalkylierung durch Umsetzung mit Alkylenoxiden (Ethylenoxid, Epoxypropan, Epoxybutan, Epoxypentan, Epoxyhexan), wobei Propoxylierung besonders bevorzugt ist.

Besonders wirksam im Sinne der Erfindung verhalten sich die Etherderivate der Stärke mit einem molaren Substitutionsgrad von 0,01 bis 5, bevorzugt von 0,1 bis 3.

Die Veresterung der Stärke kann z.B. durch Reaktion mit Anhydriden von organischen Säuren, vor allem Monocarbonsäuren, erreicht werden. Bevorzugt ist die Bildung von Stärkeestern des Typs Acetat-, Propionat- und Butyratstärke.

Eine spezielle Ausführungsform der vorliegenden Erfindung besteht darin, dass in den Zusatzmitteln die erfindungsgemäß verwendete Stärke eine Amylopektin-Stärke, insbesondere eine Amylopektin-Kartoffeistärke, ist.

Amylopektin-Stärke ist eine Stärke mit einem im Verhältnis zu konventioneller Stärke vermindertem Amylosegehalt. Bevorzugt enthält die Amylopektin-Stärke weniger als 20 %, insbesondere 0 % bis 8 %, am besten nur 0 % bis 3 % Amylose.

Amylopektin-Kartoffelstärke wird aus Kartoffeln gewonnen, die durch molekularbiologische, insbesondere gentechnische Methoden verändert wurden.

Zusammensetzung und Eigenschaften von Amylopektin-Kartoffelstärke weichen deutlich von denen der Getreidestärken des Typus "waxy" ab. Amylopektin-Kartoffelstärke hat zum Beispiel einen wesentlich niedrigeren Gehalt an gebundenen Lipiden und Proteinen als Wachsgetreidestärken. Geruchs- und Schaumprobleme, wie sie oft beim Einsatz von Wachsgetreidestärken oder deren Derivaten vorkommen, werden beim Einsatz von Amylopektin-Kartoffelstärke nicht oder nur selten und in geringerem Ausmaß beobachtet. Im Gegensatz zu Wachsgetreidestärken enthält Amylopektin-Kartoffelstärke chemisch gebundene Phosphatgruppen und besitzt daher spezifische Polyelektrolyteigenschaften.

Bei der Herstellung der Stärkederivate bewirkt die höhere Kornstabilität des Amylopektins eine Vereinfachung der Herstellungstechnologie. Das Amylopektin ist weniger alkali- und weniger temperaturempfindlich als die Amylose. Derivatisierungsreaktionen, wie z.B. Veretherungs- und Veresterungsreaktionen, sowie viele weitere Reaktionen, die bevorzugt zur Derivatisierung der Stärke eingesetzt werden, können dadurch bei kürzeren Reaktionszeiten vorgenommen werden.

Bevorzugt liegt die erfindungsgemäß verwendete Amylopektin-Kartoffelstärke in hydroxyalkylierter bzw. alkylveresterter Form vor, insbesondere mit einem Hydroxyalkylierungsgrad bzw. Alkylveresterungsgrad (DS) von 0,005 bis 0,75. Die Hydroxyalkylierungsgrade bzw. Alkylveresterungsgrade liegen am besten im Bereich von 0,015 bis 0,2, vor allem im Bereich von 0,02 bis 0,1.

Die Länge der Kohlenstoffketten in den Hydroxyalkyl- bzw. Alkylestergruppen liegt bevorzugt im Bereich von 1 bis 6 Kohlenstoffatomen.

In wässerigem Medium bilden alle genannten modifizierten und/oder chemisch derivatisierten Stärken Hydrokolloide, die die Eigenschaften der damit versetzten Spritzbetonmassen im gewünschten Sinne verändern. Sie bewirken sowohl im Trockenspritzverfahren als auch im Nassspritzverfahren eine deutliche Herabsetzung der Staubentwicklung und eine Verminderung des Rückpralls. Beim Trockenspritzverfahren können die erfindungsgemäßen Zusatzmittel mit ofentrockenen oder mit erdfeuchten Zuschlägen, mit hochreaktiven, sulfatarmen Spritzbetonzementtypen ohne Beschleuniger, mit herkömmlichen Zementtypen und Beschleunigern und mit den gebräuchlichen Verarbeitungsverfahren eingesetzt werden.

Die erfindungsgemäßen Zusatzmittel können dabei sowohl bereits im Zementwerk dem Zement selbst oder an der Baustelle dem Zuschlagstoff beim Trocknungsprozess oder als separate Komponente bei der Mischanlage vor Ort, sie können dem pulverförmigen Beschleuniger, dem flüssigen Beschleuniger, bereits bei dessen Herstellung oder vor Ort, oder dem Anmachwasser zugesetzt werden.

Im Nassspritzverfahren ist der Zusatz der erfindungsgemäßen Stärkederivate gleichermaßen universell möglich, also entweder zum Zement, zu den Zuschlagstoffen, den Betonverflüssigern, den Beschleunigern, im Transportbetonmischwerk, im Mischwerk vor Ort oder in der mobilen Spritzbetonmaschine vor Ort.

Die neuen Zusatzmittel sind mit allen dem Fachmann bekannten Zusatzstoffen sehr gut verträglich und beliebig kombinierbar.

Die deutliche Staubreduktion beim Einsatz der erfindungsgemäßen Zusatzmittel im Trockenspritzverfahren findet durch Adsorption der Feinststoffpartikel direkt nach dem Austritt aus der Spritzdüse auf den durch das Anmachwasser angefeuchteten Stärkederivatpartikeln statt. Dabei wird die Vermischung der Komponenten während des Förderprozesses in den Mischaggregaten, den Förderschläuchen oder in der Spritzdüse nicht erschwert, da sehr homogene Spritzbetone entstehen.

Die Reduktion des Rückpralls ergibt sich durch die stark plastifizierende Wirkung der quellenden oder bereits gequollenen Stärketeilchen, wobei der geringfügig verzögernde Effekt dieser Zusatzmittel nicht störend wirkt, sondern nur die Zeit, in der die Spritzbetonschicht im plastischen Zustand ist, etwas verlängert. Das geringfügig verzögerte Einsetzen der Wirkung der Erstarrungsbeschleuniger oder der Erstarrung der Zemente ohne Beschleuniger und die damit einhergehende zeitversetzte Festigkeitszunahme wird durch die hohe Haftkraft und die Konsistenzzunahme, die durch die erfindungsgemäßen Zusatzmittel bewirkt wird, bei weitem ausgeglichen. Durch die höhere Haftkraft der Spritzbetone kommt es sehr schnell zum Aufbau einer ersten plastischen Spritzbetonschicht, die die Zeit, in der hauptsächlich die Zuschlagstoffe durch elastischen Stoß von der Wand abprallen, verkürzt und damit die ersten Rückprallmengen reduziert. Beim wiederholten Spritzvorgang treffen die Zuschlagstoffkörner nicht auf die bereits erstarrte erste Spritzbetonschicht, sondern auf die noch plastische Oberfläche. Der Rückprall wird dadurch bei wiederholtem Überspritzen extrem reduziert. Insgesamt kann daher durch den Einsatz der erfindungsgemäßen Zusatzmittel der Rückprall sowohl beim Nassspritzverfahren, besonders aber beim Trockenspritzverfahren um mehr als 50 % reduziert werden.

Durch die erhöhte Haftkraft der Spritzbetone ist die Aufbringung stärkerer Spritzbetonschichten in einem Arbeitsgang möglich.

Da die Einstellung des W/Z-Wertes beim Trockenspritzbetonverfahren, wie bereits oben beschrieben, durch den Düsenführer erfolgt, waren große Schwankungen der Betonqualität bisher unausweichlich mit dem Verfahren verbunden.

Sehr überraschend hat sich gezeigt, dass beim erfindungsgemäßen Einsatz der Stärkederivate das Spritzbetonsystem in Abhängigkeit von der Zusatzmenge des Stärkederivates und in Abhängigkeit vom W/Z-Wert in seinem Fließverhalten gesteuert werden kann, und zwar nicht in der bisher bekannten Art und Weise nur durch Zusatz von mehr oder weniger Anmachwasser und/oder durch Zusatz von allgemein bekannten Thixotropiermitteln.

Die Wirkung von Thixotropiermitteln sei im Folgenden kurz erklärt: Wie dem Fachmann bekannt ist, wird den mit Wasser angerührten Baustoffmischungen, die auf der Basis hydraulischer Bindemittel beruhen, durch den Zusatz von Thixotropiermitteln ein strukturviskoses Fließverhalten vermittelt. Dieses Verhalten wird auch als Thixotropie bezeichnet, d.h. ein Verhalten, bei dem im ruhenden Zustand Dickflüssigkeit, im bewegten Zustand aber zunehmend flüssiges Verhalten vorliegt. Wenn der Wassergehalt der Baustoffmischung zu hoch ist, kann durch Zusatz von weiterem Thixotropiermittel eine Verdickung und demzufolge auch wieder eine bessere Verarbeitbarkeit erzielt werden. Als Thixotropiermittel wurden u.a. auch Polysaccharidderivate vorgeschlagen.

So sind z.B. in der Europäischen Patentanmeldung 0 656 327 und in der Europäischen Patentanmeldung 0 465 991 solche Thixotropiermittel auf der Basis von Kolloiden (Cellulosen), Alginaten oder polysacchariden und Polyvinylalkohol erwähnt, ohne weiter auf ihre Wirkungsweise im Zusammenhang mit Spritzbeton einzugehen. Die Verwendung von Stärkederivaten im Zusammenhang mit der Herstellung von Spritzbeton ist nicht beschrieben.

Andererseits geht die Verwendung von Sacchariden, Saccharose, Glucose und anderen Polyhydroxylverbindungen als Abbindeverzögerer in Zementmischungen z.B. aus den Europäischen Patentanmeldungen O 402 319 bzw. O 508 158 als bekannt hervor.

Überraschenderweise hat sich beim Einsatz der Stärkederivate auf dem relativ neuen Gebiet der Spritzbetone nun aber eine ganz andere Verhaltensweise gezeigt:

Bis zu einem W/Z-Wert, der die gebräuchliche Konsistenz vermittelt, die auch der Düsenführer beim Spritzbeton durch Regulierung der Anmachwassermenge an der Düse einstellt, und der für viele Spritzbetonsysteme gleich oder kleiner 0,55 ist, bewirken Stärkederivate in Mengen bis zu einem ökonomisch vertretbaren Wert das Staubbindevermögen, die Haftkraft und die Reduktion des Rückpralls. Bei höheren W/Z-Werten, ab welchen die Betoneigenschaften, wie Frühfestigkeit, Endfestigkeit, wasserdurchlässigkeit, Härte, Sulfatbeständigkeit, Rissanfälligkeit, Korrosionsbeständigkeit, Frost/Taubeständigkeit usw. bereits deutlich schlechter werden, bewirken steigende Mengen der erfindungsgemäßen Zusatzmittel nicht kontinuierlich steigende Konsistenz, sondern eine sehr deutliche Änderung des Fließverhaltens der Spritzbetone, die zum Abfließen derselben vom Untergrund führt. Bei diesen zu hohen W/Z-Werten bewirken steigende Einsatzmengen von Stärkederivaten also sinkende Konsistenz. Der Düsenführer kann daher den optimalen W/Z-Wert durch Manipulation der Anmachwassermenge an der Düse nicht überschreiten, ohne feststellen zu müssen, dass der Spritzbeton von der Fläche abrinnt und eigentlich nicht mehr verarbeitbar ist. Er muss daher die Anmachwassermenge wieder zurücknehmen und kann daher automatisch nicht in die für die Betonqualität ungünstigen Bereiche der W/Z-Werte hineinarbeiten.

Die erfindungsgemäß verwendeten Stärkederivate sind in Spritzbetonen Regler, die die Einstellung des optimalen W/Z-Wertes für die jeweilige Formulierung ermöglichen. Derartige Regler hat es bisher in der Technik des Betonspritzens noch nie gegeben und durch ihren Einsatz wird die Arbeit des Düsenführers ganz wesentlich erleichtert. Somit wirken die neuen Zusatzmittel sowohl aus arbeitshygienischer und ökologischer Sicht verbessernd durch herabgesetzte Staubbildung, bewirken die ökologisch und ökonomisch begrüßenswerte Rückprallverminderung und bedingen eine gleichmäßigere Qualität der hergestellten Betone, wodurch nicht nur die Arbeit des Bedienungspersonals erleichtert wird, sondern auch aufwendige Erneuerungen und Reparaturen, die nach erfolgter Betonanalyse wegen ungleichmäßiger Betonqualität gleich bei der Herstellung oder in späterer Folge notwendig sind, entfallen.

Die optimale Einsatzmenge des Stärkederivates hängt vom jeweiligen Spritzbetonverfahren, von der jeweiligen Trockengemischzusammensetzung, von der jeweiligen Zementtype, von Art und Zusammenssetzung des Zuschlags und von den gewünschten Spritzbetoneigenschaften bei der Verarbeitung sowie den gewünschten Betonqualitäten, d.h. Frühfestigkeit und Festigkeitsklasse, ab. Es wird die Menge eingesetzt, die ökonomisch sinnvoll ist (je höher desto stärker die gewünschten Effekte), die aber bei Überschreiten des für die gewünschten Betoneigenschaften erlaubten W/Z-Wertes sicher zur Konsistenzerniedrigung führt.

Daher kann durch richtige Wahl der Einsatzmenge jener W/Z-Wert gewählt werden, bis zu welchem es zu keinem Abfließen des Spritzbetons kommt, und damit kann durch die richtige Wahl der Einsatzmenge die Betonqualität für das jeweilige Trockengemisch konstant geregelt werden. Schwankungen der Zementqualität und Schwankungen der Feuchtigkeit der Zuschlagstoffe werden auf sehr einfache Weise ausgeglichen und gleichmäßige Betonqualität wird über lange Bauabschnitte hinweg bei Einsatz von Spritzbeton ermöglicht, was bisher nicht möglich war.

Die Spritzverfahren können gerätetechnisch sehr viel einfacher und kostengünstiger durchgeführt werden.

Für das Nassspritzverfahren sind insbesondere Stärkeether bevorzugt, die zusätzlich durch eine Vernetzung mit mehrbindigen Reagentien erhalten wurden.

Erfindungsgemäß ist somit die Verwendung von modifizierter und/oder chemisch derivatisierter natürlicher oder biotechnologisch hergestellter Stärke als Zusatzmittel zur gleichzeitigen Herabsetzung des Staubens und des Rückpralls sowie vorzugsweise zur Regelung des W/Z-abhängigen Fließverhältens von Spritzbeton während der Verarbeitung vorgesehen.

In einer Trockenmischung für Spritzbeton, die hydraulisches Bindemittel und zuschlagstoffe enthält kann das oben genanntes Zusatzmittel in einer Menge von 0,01 bis 5 Gew.-%, bevorzugt in einer Menge von 0,03 bis 1 Gew.-%, enthalten sein.

In einer Spritzbeton-Vormischung, die ein hydraulisches Bindemittel enthält kann das oben genanntes Zusatzmittel in einer Menge von 0,01 - 10 Gew.-%, vorzugsweise von 0,05 - 5 Gew.-%, insbesondere von 0,1 -3 Gew.-%, bezogen auf das Bindemittel, enthalten sein.

Auch ein pulverförmiges oder flüssiges Additiv für Spritzbeton, das einen Abbindebeschleuniger und ein oben genanntes Zusatzmittel enthält, ist möglich.

### Beispiele

In den folgenden Tabellen ist das Verhalten der erfindungsgemäß verwendeten Stärkederivate in einer typischen Trockenspritzbetonformulierung skizziert. Dabei wurde die Spritzbetonkonsistenz, die bei der Verarbeitung in der Spritzputzpraxis erwartet wird, durch die Bestimmung eines Ausbreitmaßes des Spritzbetons nach definierter Methode ermittelt. Bei deutlichem Überschreiten eines W/Z-Wertes von 0,55 treten für diese konkrete Betonmischung bereits deutliche Einbußen der Betoneigenschaften auf. Unterhalb eines W/Z-Wertes von 0,55 liegen die ermittelten Frühfestigkeiten und die Endfestigkeit über den von den einschlägigen Richtlinien und Normen geforderten Werten. Für die Bestimmung der Konsistenz wurde auf den Zusatz von Beschleunigern oder die Verwendung von hochreaktiven, sehr kurzen Zementtypen verzichtet, um genügend Messzeit für die Bestimmung der Konsistenz zu erhalten, ohne dass die Messergebnisse durch bereits einsetzende Erstarrungsreaktionen verfälscht würden. Wie dem Fachmann bekannt ist, werden durch das Weglassen der Beschleuniger zwar die Frühfestigkeits- und die Endfestigkeitswerte beeinflusst, was aber in diesem Fall keine Rolle spielt, da nur die Konsistenz direkt beim Spritzprozess durch die Messungen bestimmt wurde.

### Beispiel 1

Zusammensetzung der Trockenmischung:
400 kg Portlandzement PZ 375 ohne Abbindebeschleuniger
1720 kg Zuschlagstoff 0 - 8 mm
Zusatz: 2-Hydroxypropylstärkeether DS 0,5

**Tabelle 1**

| | W/Z-Wert | | |
|---|---|---|---|
| Einsatzmenge | 0,5 | 0,6 | 0,7 |
| ohne | entspricht | * | ** |
| 0,05 % | entspricht | entspricht | entspricht |
| 0,10 % | entspricht | entspricht | * |
| 0,25 % | entspricht | * | ** |
| 0,50 % | entspricht | ** | *** |

| | | | |
|---|---|---|---|
| * Konsistenz zu dünn | | | |
| ** Konsistenz noch dünner | | | |
| *** Konsistenz sehr dünn | | | |

Die Tabelle zeigt, dass bei Einsatz von 0,25 % erfindungsgemäßem Stärkeether bei der Verarbeitung ein W/Z-Wert von 0,55 nicht mehr überschritten werden kann, ohne dass die optimale Konsistenz verloren geht. Wie aus dem Vergleich ohne Zusatz gesehen werden kann, wird die optimale Konsistenz ohne Zusatz ebenfalls bei einem W/Z-Wert von 0,55 unterschritten.

Bei der Verarbeitung der entsprechenden Spritzbetonformulierung mit Beschleunigerzusatz wurde die deutliche Staub- und Rückprallreduktion festgestellt. Die ebenfalls ermittelten Frühfestigkeits- und Endfestigkeitswerte lagen klar über den geforderten Grenzen und es konnten keine Nachteile zur bisherigen Standardformulierung ohne Zusatz an erfindungsgemäßem zusatzmittel festgestellt werden.

### Beispiel 2

Zusammensetzung der Trockenmischung:
400 kg Portlandzement PZ 375 ohne Abbindebeschleuniger
1720 kg Zuschlagstoff 0 - 8 mm
Zusatz: Standardthixotropiermittel für Putze und Kleber

**Tabelle 2**

| | W/Z-Wert | | |
|---|---|---|---|
| Einsatzmenge | 0,5 | 0,6 | 0,7 |
| ohne | entspricht | * | ** |
| 0,05 % | entspricht | entspricht | entspricht |
| 0,10 % | entspricht | entspricht | entspricht |
| 0,25 % | entspricht | entspricht | entspricht |
| 0,50 % | entspricht | entspricht | entspricht |

| | | | |
|---|---|---|---|
| * Konsistenz zu dünn | | | |
| ** Konsistenz noch dünner *** Konsistenz sehr dünn | | | |

Die Werte aus Tabelle 2 zeigen, dass ein dem Fachmann hinlänglich bekannter und eingesetzter Standardverdicker für Putz- bzw. Klebermischungen beim Einsatz in der Spritzbetonformulierung viel zu hohe Konsistenzen ermöglicht. Durch das deutliche Überschreiten des W/Z-Wertes 0,55, das dem Düsenführer in diesem Fall ermöglicht ist, sinkt die Betonqualität rapide ab. Die Verarbeitung des Spritzbetons war zwar bis zu einem W/Z-Wert von 0,7 möglich, die geförderten Frühfestigkeiten konnten dabei aber nicht mehr erreicht werden. Die Endfestigkeit lag deutlich unter der geforderten Festigkeitsklasse.

## Patentansprüche

1. Verwendung von modifizierten und/oder chemisch derivatisierter, natürlicher oder biotechnölogisch hergestellter Stärke, gegebenenfalls in Mischung untereinander und mit als Baustoffzusatzmittel bekannten Additiven als Zusatzmittel für Spritzbeton.

2. Verwendung nach Anspruch 1, **dadurch gekennzeichnet, dass** die Stärke kaltwasserquellend oder kaltwasserlöslich ist.

3. Verwendung nach Anspruch 1 oder 2, **dadurch gekennzeichnet, dass** die Stärke durch thermische Behandlung depolymerisiert ist.

4. Verwendung nach Anspruch 1 oder 2, **dadurch gekennzeichnet, dass** die Stärke dextriniert ist.

5. Verwendung nach Anspruch 1 oder 2, **dadurch gekennzeichnet, dass** die Stärke durch Behandlung mit Alkalien, Säuren oder Oxidationsmitteln depolymerisiert bzw. derivatisiert ist.

6. Verwendung nach einem der Ansprüche 1 bis 5, **dadurch gekennzeichnet, dass** die Stärke durch Einbau von Ester- und/oder Ethergruppen derivatisiert ist.

7. Verwendung nach Anspruch 6, **dadurch gekennzeichnet, dass** die Etherderivate der Stärke einen molaren Substitutionsgrad von 0,01 bis 5, bevorzugt von 0,1 bis 3, aufweisen.

8. Verwendung nach Anspruch 6 oder 7, **dadurch gekennzeichnet, dass** das Stärkederivat Methyl-, Ethyl-, Propyl-, Hydroxyethyl-, Hydroxypropyl-, Hydroxybutylether-, Carboxymethylether-, Cyanoethylether-, carbamoylethergruppen enthält.

9. Verwendung nach Anspruch 6, **dadurch gekennzeichnet, dass** das Stärkederivat Estergruppen mit organischen Mono-, Di- oder Tricarbonsäuren mit einer Kettenlänge von 1 bis 25 Kohlenstoffatomen enthält.

10. Verwendung nach einem der Ansprüche 1 bis 9, **dadurch gekennzeichnet, dass** die Stärke Ether- oder Estergruppen mehrbindiger Reaktionsmittel enthält und die Polymerketten insbesondere mit Epichlorhydrin, Trimetaphosphat, Phosphoroxychlorid, Zitronensäure, Adipinsäure, vernetzt sind.

11. Verwendung nach einem der Ansprüche 1 bis 10, **dadurch gekennzeichnet, dass** die Stärke zur kaltwasserquellenden oder kaltwasserlöslichen Form aufgeschlossen ist und zusätzlich eine Derivatisierung durch Methyl-, Ethyl-, Propyl-, Hydroxyethyl-, Hydroxypropyl-, Hydroxybutyl-, Carboxymethyl-, Cyanoethyl- oder Carbamoylethylethergruppen oder Gemische derselben und gegebenenfalls zusätzlich eine Substitution durch Esterbindungen und/oder eine Vernetzung aufweist.

12. Verwendung von modifizierter und/oder chemisch derivatisierter Amylopektin-Stärke als Zusatzmittel für Spritzbeton.

13. Verwendung nach Anspruch 12, **dadurch gekennzeichnet, dass** die Amylopektin-Stärke einen Amylosegehalt von weniger als 20%, insbesondere von 0% bis 8%, am besten von 0% bis 3%, aufweist.

14. Verwendung nach Anspruch 12 oder 13, **dadurch gekennzeichnet, dass** die Amylopektin-Stärke eine Amylopektin-Kartoffelstärke ist.

15. Verwendung nach einem der Ansprüche 12 bis 14, **dadurch gekennzeichnet, dass** die Stärke eine hydroxyalkylierte bzw. alkylveresterte Amylopektin-Kartoffelstärke ist.

16. Verwendung nach Anspruch 15, **dadurch gekennzeichnet, dass** die hydroxyalkylierte bzw. alkylveresterte Amylopektin-Kartoffelstärke einen Hydroxylierungsgrad bzw. Alkylveresterungsgrad im Bereich von 0,005 bis 0,75, vorzugsweise von 0,015 bis 0,2, insbesondere von 0,02 bis 0,1, aufweist.

17. Verwendung nach Anspruch 15 oder 16, **dadurch gekennzeichnet, dass** in der hydroxyalkylierten bzw. alkylveresterten Amylopektin-Kartoffelstärke die Kohlenstoffketten eine Länge im Bereich von 1 bis 6 Kohlenstoffatomen aufweisen.

## Claims

1. The use of modified and/or chemically derivatized, natural or biotechnologically produced starch, optionally mixed with one another, and with additives known as construction material additives, as additives for shotcrete.

2. The use according to claim 1, **characterised in that** the starch is cold-water swelling or cold-water soluble.

3. The use according to claim 1 or 2, **characterised in that** the starch is depolymerized by thermal treatment.

4. The use according to claim 1 or 2, **characterised in that** the starch is dextrinated.

5. The use according to claim 1 or 2, **characterised in that** the starch is depolymerized, or derivatized, respectively, by treatment with alkalis, acids or oxidating agents.

6. The use according to any one of claims 1 to 5, **characterised in that** the starch is derivatized by incorporation of ester and/or ether groups.

7. The use according to claim 6, **characterised in that** the ether derivatives of the starch have a molar substitution degree of from 0.01 to 5, preferably from 0.1 to 3.

8. The use according to claim 6 or 7, **characterised in that** the starch derivative contains methyl, ethyl, propyl, hydroxyethyl, hydroxypropyl, hydroxybutyl-ether, carboxymethyl-ether, cyanoethyl-ether, carbamoyl-ether groups.

9. The use according to claim 6, **characterised in that** the starch derivative contains ester groups with organic mono-, di-or tri-carboxylic acids with a chain length of from 1 to 25 carbon atoms.

10. The use according to any one of claims 1 to 9, **characterised in that** the starch contains ether or ester groups of multi-binding reaction agents, and the polymer chains in particular are cross-linked with epichlorohydrin, trimetaphosphate, phosphoroxychloride, citric acid, adipinic acid.

11. The use according to any one of claims 1 to 10, **characterised in that** the starch is solubilized to the cold-water-swelling or cold-water-soluble form and additionally comprises a derivatization by methyl, ethyl, propyl, hydroxyethyl, hydroxypropyl, hydroxybutyl, carboxymethyl, cyanoethyl or carbamoylethyl-ether groups or mixtures thereof and, optionally, additionally a substitution by ester bonds and/or a cross-linking.

12. The use of modified and/or chemically derivatized amylopectin starch as an additive for shotcrete.

13. The use according to claim 12, **characterised in that** the amylopectin starch has an amylose content of less than 20%, in particular from 0% to 8%, at best from 0% to 3%.

14. The use according to claim 12 or 13, **characterised in that** the amylopectin starch is an amylopectin potato starch.

15. The use according to any one of claims 12 to 14, **characterised in that** the starch is a hydroxy-alkylated, or alkyl-esterified amylopectin potato starch

16. The use according to claim 15, **characterised in that** the hydroxy-alkylated or alkyl-esterified amylopectin potato starch has a degree of hydroxylation, or a degree of alkyl esterification, respectively, in the range of from 0.005 to 0.75, preferably from 0.015 to 0.2, in particular from 0.02 to 0.1.

17. The use according to claim 15 or 16, **characterised in that** the carbon chains in the hydroxy-alkylated, or alkyl-esterified, respectively, amylopectin potato starch have a length in the range of from 1 to 6 carbon atoms.

## Revendications

1. Utilisation d'amidons modifiés et/ou chimiquement dérivés, naturels ou préparés de manière biotechnologique, éventuellement en mélange les uns avec les autres et avec des additifs connus comme auxiliaires pour les matériaux de construction, comme additif pour du béton projeté.

2. Utilisation selon la revendication 1, **caractérisée en ce que** l'amidon gonfle dans de l'eau froide ou est soluble dans de l'eau froide.

3. Utilisation selon la revendication 1 ou 2, **caractérisée en ce que** l'amidon est dépolymérisé par traitement thermique.

4. Utilisation selon la revendication 1 ou 2, **caractérisée en ce que** l'amidon est transformé en dextrine.

5. Utilisation selon la revendication 1 ou 2, **caractérisée en ce que** l'amidon est dépolymérisé respectivement transformé en dérivé par traitement avec des alcalis, des acides ou des agents d'oxydation.

6. Utilisation selon l'une quelconque des revendications 1 à 5, **caractérisée en ce que** l'amidon est transformé en dérivé par insertion de groupes ester et/ou éther.

7. Utilisation selon la revendication 6, **caractérisée en ce que** les dérivés par l'éther de l'amidon présentent un degré de substitution molaire de 0,01 à 5, de préférence de 0,1 à 3.

8. Utilisation selon la revendication 6 ou 7, **caractérisée en ce que** le dérivé d'amidon contient des groupes méthyle, éthyle, propyle, hydroxyéthyle, hydroxypropyle, hydroxybutyléther, carboxyméthyléther, cyanoéthyléther, carbamoyléther.

9. Utilisation selon la revendication 6, **caractérisée en ce que** le dérivé d'amidon contient des groupes ester avec des acides organiques mono-, di- ou tri-carboxyliques ayant une longueur de chaîne de 1 à 25 atomes de carbone.

10. Utilisation selon l'une quelconque des revendications 1 à 9, **caractérisé en ce que** l'amidon contient des groupes éther ou ester de milieux réactionnels polyvalents et les chaînes polymères sont réticulées particulièrement avec de l'épichlorhydrine, du trimétaphosphate, de l'oxychlorure de phosphore, de l'acide citrique, de l'acide adipique.

11. Utilisation selon l'une quelconque des revendications 1 à 10, **caractérisée en ce que** l'amidon est désagrégé dans une forme gonflant dans l'eau froide ou soluble dans l'eau froide et présente en outre une forme dérivée par l'intermédiaire de groupes méthyl-, éthyl-, propyl-, hydroxyéthyl-, hydroxypropyl-, hydroxybutyl-, carboxyméthyl-, cyanoéthyl- ou carbamoyléthyléther ou par des mélanges de ceux-ci et éventuellement en outre une substitution par des liaisons ester et/ou une réticulation.

12. Utilisation d'amylopectine-amidon modifié et/ou chimiquement dérivé comme additif pour du béton projeté.

13. Utilisation selon la revendication 12, **caractérisé en ce que** l'amylopectine-amidon présente une teneur en amylose inférieure à 20 %, en particulier de 0 % à 8 %, encore mieux de 0 % à 3 %.

14. Utilisation selon la revendication 12 ou 13, **caractérisée en ce que** l'amylopectine-amidon est un amylopectine-amidon de pomme de terre.

15. Utilisation selon l'une quelconque des revendications 12 à 14, **caractérisée en ce que** l'amidon est un amylopectine-amidon de pomme de terre hydroxyalkylé respectivement alkylestérifiée.

16. Utilisation selon la revendication 15, **caractérisée en ce que** l'amylopectine-amidon de pomme de terre hydroxyalkylé respectivement alkylestérifié présente un degré d'hydroxylation respectivement un degré d'alkylestérification dans un domaine de 0,005 à 0,75, de préférence de 0,015 à 0,2, en particulier de 0,02 à 0,1.

17. Utilisation selon la revendication 15 ou 16, **caractérisée en ce que** les chaînes carbonées présentent dans l'amylopectine-amidon de pomme de terre hydroxyalkylé respectivement alkylestérifié une longueur dans le domaine de 1 à 6 atomes de carbone.
